# EUROPÄISCHE PATENTANMELDUNG

(11) **EP 3 633 237 A1**
(43) Veröffentlichungstag der Anmeldung: **08.04.2020**
(21) Anmeldenummer: 18465589.2
(22) Anmeldetag: 02.10.2018
(51) Int. Cl.: F16H 57/023, F16H 3/30, F16H 57/00, F16H 57/02, F16H 55/17

(54) **GETRIEBE, INSBESONDERE KLEINGETRIEBE FÜR EINEN ELEKTROKLEINMOTOR UND VERFAHREN ZUR MONTAGE EINES GETRIEBES, INSBESONDERE EINES KLEINGETRIEBES**

(71) Anmelder: Continental Automotive GmbH, 30165 Hannover (DE)
(72) Erfinder: Albert, Eusebio-Marius, 300737 Timisoara (RO); Macovei, Mihai-Georgian, 307287 Mosnita Veche (RO); Opre, Calin, 307287 Mosnita Veche (RO)

(57) **Zusammenfassung**

Ein Kleingetriebe (1) für Stell- und Steuereinrichtungen in Kraftfahrzeugen hat axial zueinander bewegbare Zahnräder (5, 7) . Eines der Zahnräder (7) hat einen Ausrichtsabschnitt (9), mit dem er einen Eingriffsabschnitt (8) stirnseitig überragt. In einer Montagestellung werden die Zahnräder (5, 7) in eine Position bewegt, in der der Eingriffsabschnitt (8) einer Stirnseite des anderen Zahnrades (5) gegenübersteht. Anschließend wird das den Ausrichtsabschnitt (9) aufweisende Zahnrad (7) in das andere Zahnrad (5) eingedreht und damit die Zahnräder (5, 7) zueinander ausgerichtet. In einem letzten Arbeitsgang werden die Zahnräder (5, 7) in eine Betriebsstellung bewegt, in der sie über den vollen Umfang in Eingriff stehen.

## Beschreibung

Die Erfindung betrifft ein Getriebe, insbesondere Kleingetriebe für einen Elektrokleinmotor, mit einem ersten Zahnrad und einem zweiten, in einer Betriebsstellung mit einem Eingriffsabschnitt in Eingriff mit dem ersten Zahnrad stehenden zweiten Zahnrad. Weiterhin betrifft die Erfindung ein Verfahren zur Montage eines Getriebes, insbesondere eines Kleingetriebes für einen Elektrokleinmotor, bei dem ein erstes Zahnrad in Eingriff mit einem zweiten Zahnrad gebracht wird.

Kleingetriebe für Elektrokleinmotoren werden insbesondere in Kraftfahrzeugen für verschiedenste Stell- und Steuereinrichtungen eingesetzt und sind aus der Praxis bekannt. Die Stell- und Steuereinrichtungen dienen beispielsweise für Sitzverstellungen, Fensterheber, Antriebe für verschiedene Klappen und Ladeluken und dergleichen.

Zur Montage müssen die Zahnräder in Eingriff zueinander gebracht und mit dem Elektrokleinmotor verbunden werden. Da die Zahnräder meist sehr kleine Zähne aufweisen, besteht die Gefahr einer Beschädigung bei der Montage. Weiterhin befinden sich die miteinander in Eingriff zu bringenden Zähne meist verdeckt in einem Getriebegehäuse, so dass sie schwer zugänglich sind und eine Montage ohne Sichtkontakt erfolgen muss. Bei der Montage der Zahnräder besteht zudem das Problem, dass Zähne der beiden Zahnräder aufeinander stoßen und damit einen Eingriff der Zahnräder verhindern.

Der Erfindung liegt das Problem zugrunde, ein Getriebe der eingangs genannten Art so zu gestalten, dass es besonders einfach montierbar ist. Weiterhin soll ein Verfahren zur Montage eines Getriebes, insbesondere eines Kleingetriebes für einen Elektrokleinmotor, bei dem ein erstes Zahnrad in Eingriff mit einem zweiten Zahnrad gebracht wird geschaffen werden, mit dem das Getriebe besonders einfach montiert werden kann.

Das erst genannte Problem wird erfindungsgemäß dadurch gelöst, dass das zweite Zahnrad an seinem äußeren Umfang einen den Eingriffsabschnitt stirnseitig überragenden Ausrichtsabschnitt hat und dass die Zahnräder axial zueinander von einer beabstandeten Montagestellung in die Betriebsstellung bewegbar sind.

Durch diese Gestaltung lässt sich der Eingriffsabschnitt in der Montagestellung axial bis an das erste Zahnrad bewegen, ohne dass die Zahnräder ineinander greifen. Der über dem Eingriffsabschnitt hervorstehende Ausrichtsabschnitt des zweiten Zahnrades ist dabei von dem ersten Zahnrad weggedreht. Anschließend wird das zweite Zahnrad gedreht und damit der Ausrichtsabschnitt des zweiten Zahnrades in das erste Zahnrad eingedreht, so dass die beiden Zahnräder in Eingriff stehen. Im letzten Arbeitsgang werden die Zahnräder axial zueinander in die Betriebsstellung bewegt, so dass auch der Eingriffsabschnitt des zweiten Zahnrades bei entsprechender Drehstellung mit dem ersten Zahnrad in Eingriff steht. Diese Montage lässt sich besonders einfach automatisieren. Für die axiale Bewegung der Zahnräder kann eine Axialführung in einem Montagewerkzeug oder in dem Getriebe angeordnet sein.

Das zweite Zahnrad lässt sich gemäß einer vorteilhaften Weiterbildung der Erfindung einfach axial gegenüber dem ersten Zahnrad bewegen, wenn der Eingriffsabschnitt und der Ausrichtsabschnitt auf der dem Elektrokleinmotor abgewandten Ende des zweiten Zahnrades angeordnet sind.

Das Getriebe gestaltet sich gemäß einer anderen vorteilhaften Weiterbildung der Erfindung konstruktiv besonders einfach, wenn das zweite Zahnrad auf einer Welle des Elektrokleinmotors befestigt ist und dass eine Axialführung an dem Elektrokleinmotor angeordnet ist. Durch diese Gestaltung lässt sich der Elektrokleinmotor einfach als letztes Bauteil mit dem zweiten Zahnrad mit den übrigen Bauteilen des Getriebes verbinden. Da der Elektrokleinmotor in der Regel ohnehin meist als letztes Bauteil montiert wird, führt diese Gestaltung zu einer besonders einfachen Montage.

Zur weiteren Vereinfachung der Montage des Getriebes trägt es gemäß einer anderen vorteilhaften Weiterbildung der Erfindung bei, wenn eine Verschraubung des Elektrokleinmotors in einem Getriebegehäuse als Axialführung für eine bauliche Einheit aus Elektrokleinmotor und zweitem Zahnrad ausgebildet ist. Hierdurch gestaltet sich die Axialführung zudem besonders einfach, weil eine solche Verschraubung für den Elektrokleinmotor ohnehin vorhanden sein muss.

Zur weiteren Vereinfachung der Montage des Getriebes trägt es gemäß einer anderen vorteilhaften Weiterbildung der Erfindung bei, wenn sich der Ausrichtsabschnitt über den halben Umfang des zweiten Zahnrades erstreckt. Durch diese Gestaltung ist sichergestellt, dass sich der Ausrichtsabschnitt bei der Montage von dem ersten Zahnrad wegdrehen lässt, um eine ungehinderte axiale Bewegung des zweiten Zahnrades zu ermöglichen.

Die Anzahl an zu montierenden Bauteilen des Getriebes lässt sich gemäß einer anderen vorteilhaften Weiterbildung der Erfindung besonders gering halten, wenn der Ausrichtsabschnitt einstückig mit dem Eingriffsabschnitt gefertigt ist. Dies trägt zur weiteren Vereinfachung der Montage des Getriebes bei.

Vorhandene Getriebe lassen sich gemäß einer anderen vorteilhaften Weiterbildung der Erfindung einfach nachrüsten und damit ebenfalls besonders einfach montieren, wenn der Ausrichtsabschnitt lösbar mit dem zweiten Zahnrad verbunden ist.

Die Montage des lösbar mit dem zweiten Zahnrad verbundenen Ausrichtsabschnitt gestaltet sich gemäß einer anderen vorteilhaften Weiterbildung der Erfindung besonders einfach, wenn der Ausrichtsabschnitt einen Zapfen hat und dass der Zapfen in einer zentralen Bohrung des zweiten Zahnrades befestigt ist. Besonders einfach lässt sich der Ausrichtsabschnitt hierbei in die zentrale Bohrung einpressen. Vorzugsweise ist die zentrale Bohrung die Bohrung für eine Welle des Elektrokleinmotors.

Das zweit genannte Problem, nämlich die Schaffung eines Verfahrens zur Montage eines Getriebes, insbesondere eines Kleingetriebes für einen Elektrokleinmotor, bei dem ein erstes Zahnrad in Eingriff mit einem zweiten Zahnrad gebracht wird, mit dem das Getriebe besonders einfach montiert werden kann, wird erfindungsgemäß dadurch gelöst, dass das zweite Zahnrad in eine Montagestellung gebracht wird, bis ein stirnseitig zurückgesetzter Eingriffsabschnitt des zweiten Zahnrades einer Stirnseite des ersten Zahnrades gegenübersteht, dass das zweite Zahnrad um seine Drehachse gedreht wird, bis das zweite Zahnrad mit einem stirnseitig vorstehenden Ausrichtsabschnitt in das erste Zahnrad eingreift und dass die beiden Zahnräder axial zueinander in eine Betriebsstellung bewegt werden, in der die beiden Zahnräder über den vollen Umfang miteinander in Eingriff stehen.

Durch diese Gestaltung lassen sich die beiden Zahnräder ohne Sichtkontakt einfach montieren, weil die Betriebsstellung des zweiten Zahnrades nach dem sicheren Eindrehen des Ausrichtsabschnitts in das erste Zahnrad erfolgen kann. In dieser Stellung sind die Zähne der Zahnräder zueinander ausgerichtet, so dass die axiale Bewegung des zweiten Zahnrades in die Betriebsstellung im Eingriff der Zähne erfolgt. Hierdurch gestaltet sich die Montage des Getriebes besonders einfach.

Die Montage des Getriebes lässt sich gemäß einer anderen vorteilhaften Weiterbildung der Erfindung von der Montagestellung in die Betriebsstellung durch Bewegen eines einzigen der Zahnräder erreichen, wenn das zweite Zahnrad axial von der Montagestellung in die Betriebsstellung bewegt wird. Dies führt zu einer weiteren Vereinfachung der Montage des Getriebes.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: schematisch ein Kleingetriebe während der Montage in einer Montagestellung,
- Fig.2: das Kleingetriebe aus Figur 1 in einem weiteren Bearbeitungsschritt,
- Fig.3: das Kleingetriebe aus Figur 1 in Betriebsstellung,
- Fig.4: ein Zahnrad des Kleingetriebes aus den Figuren 1 bis 3 in einer perspektivischen Darstellung,
- Fig.5: eine weitere Ausführungsform des Kleingetriebes in einer Montagestellung,
- Fig.6: die Ausführungsform des Kleingetriebes aus Figur 5 in einer Betriebsstellung.

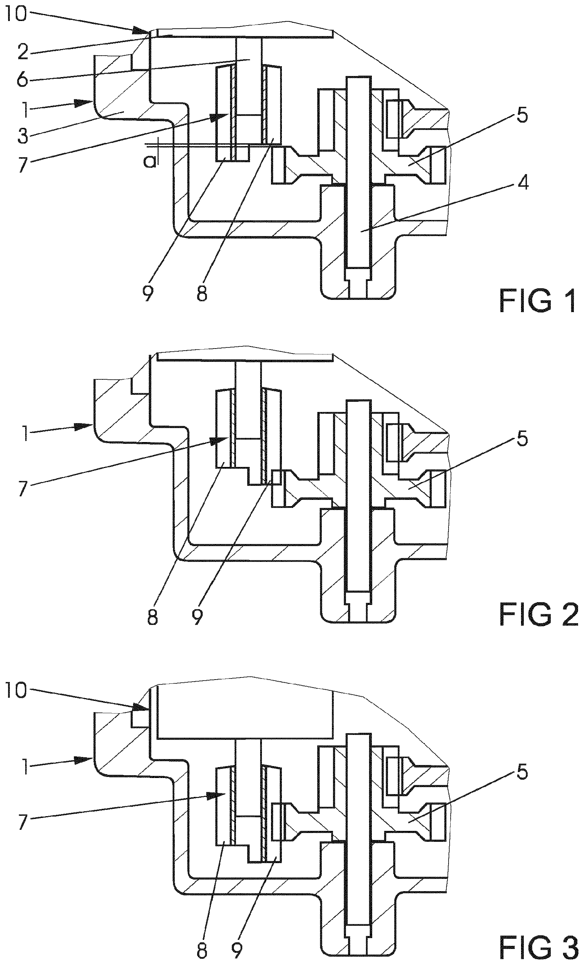

Figur 1 zeigt schematisch einen Teilbereich eines Kleingetriebes 1 mit einem Elektrokleinmotor 2, wie es für Stell- und Steuereinrichtungen in Kraftfahrzeugen eingesetzt wird in einer Montagestellung. Das Kleingetriebe 1 hat ein in einem Getriebegehäuse 3 auf einer Achse 4 drehbar gelagertes erstes Zahnrad 5 und ein auf einer drehbaren Welle 6 des Elektrokleinmotors 2 befestigtes zweites Zahnrad 7. Die Zahnräder 5, 7 stehen in der dargestellten Montagestellung nicht im Eingriff. Vielmehr weisen die Zahnräder 5, 7 einen axialen Abstand zueinander auf. Das zweite Zahnrad 7 hat an seinem, dem Elektrokleinmotor 2 abgewandten Ende einen Eingriffsabschnitt 8 und einen den Eingriffsabschnitt überragenden 8 Ausrichtsabschnitt 9. Der Ausrichtsabschnitt 9 ist von dem ersten Zahnrad 5 weggedreht. Weiterhin hat der Elektrokleinmotor 2 eine schematisch dargestellte Axialführung 10 in dem Getriebegehäuse 3. Die Axialführung 10 ermöglicht die axiale Bewegung des Elektrokleinmotors 2 und damit des zweiten Zahnrades 7 entlang der Drehachse der Welle 6 des Elektrokleinmotors 2. Die Axialführung 10 ist Teil einer nicht näher dargestellten Verschraubung des Elektrokleinmotors 2 in dem Getriebegehäuse 3.

Figur 2 zeigt den Teilbereich des Kleingetriebes 1 aus Figur 1 in einem weiteren Bearbeitungsschritt. Gegenüber der Montagestellung wurde das zweite Zahnrad 7 um eine halbe Umdrehung gedreht, so dass der Ausrichtsabschnitt 9 des zweiten Zahnrades 7 in das erste Zahnrad 5 eingedreht ist. Damit stehen die Zahnräder 5, 7 in Eingriff zueinander.

Figur 3 zeigt den Teilbereich des Kleingetriebes 1 aus Figur 1 in einer Betriebsstellung. Hierbei ist zu erkennen, dass der Elektrokleinmotor 2 entlang der Axialführung 10 axial in das Getriebegehäuse 3 bewegt wurde, so dass auch der Eingriffsabschnitt 8 des zweiten Zahnrades 7 auf der Höhe des ersten Zahnrades 5 angeordnet ist. Damit stehen die beiden Zahnräder 5, 7 in vollem Umfang in Eingriff zueinander. Der Elektrokleinmotor 2 kann in dieser Stellung in dem Getriebegehäuse 3 verschraubt werden.

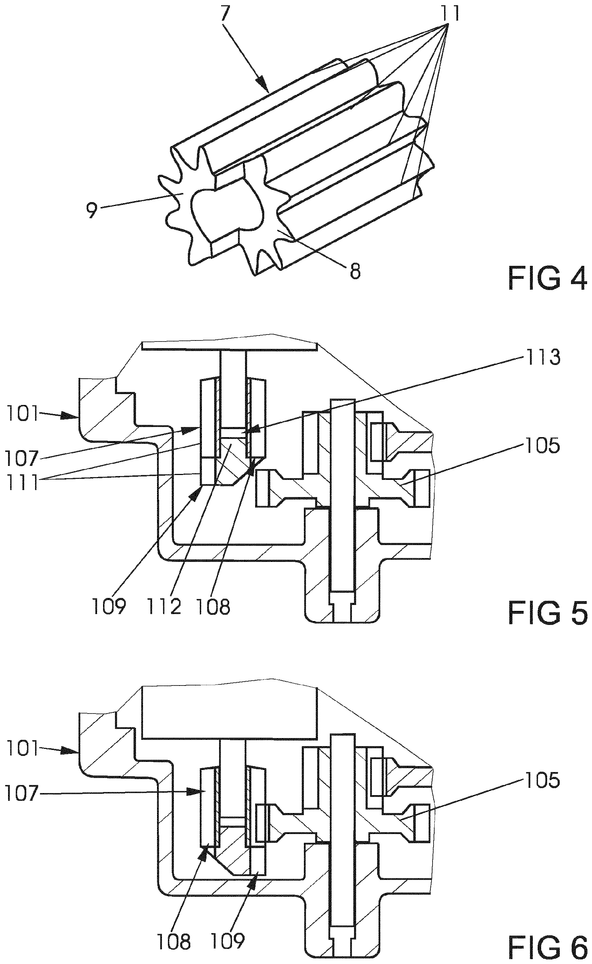

Figur 4 zeigt perspektivisch das zweite Zahnrad 7 des Kleingetriebes 1 aus den Figuren 1 bis 3. Der Eingriffsabschnitt 8 und der Ausrichtsabschnitt 9 unterscheiden sich nur durch ihre unterschiedlichen Höhen. Der Ausrichtsabschnitt 9 überragt den Eingriffsabschnitt 8 und erstreckt sich um etwa den halben Umfang des zweiten Zahnrades 7. Einzelne Zähne 11 des zweiten Zahnrades 7 erstrecken sich über die volle Höhe der jeweiligen Abschnitte 8, 9.

Figur 5 zeigt eine weitere Ausführungsform eines Kleingetriebes 101 in einer Montagestellung. Diese unterscheidet sich von der aus Figur 1 nur dadurch, dass ein zweites Zahnrad 107 lösbar mit einem Ausrichtsabschnitt 109 verbunden ist. Das zweite Zahnrad bildet einen Eingriffsabschnitt 108. Einzelne Zähne 111 erstrecken sich über die gesamte Höhe des zweiten Zahnrades 107 und über den Ausrichtsabschnitt 109. Der Ausrichtsabschnitt 109 hat einen Zapfen 112, mit dem er in eine zentrale Bohrung 113 des zweiten Zahnrades 107 eingepresst ist. Dreht man ausgehend von der in Figur 5 dargestellten Stellung das zweite Zahnrad 107 um eine halbe Umdrehung, gelangt der Ausrichtsabschnitt 109 mit seinen Zähnen 111 in ein erstes Zahnrad 105 und richtet damit die beiden Zahnräder 105 zueinander aus.

Anschließend lässt sich ein das zweite Zahnrad 107 halternder Elektrokleinmotor 102 axial in die Betriebsstellung bewegen, wie es in Figur 6 dargestellt ist. Die beiden Zahnräder 105, 107 stehen nun unmittelbar in Eingriff. Der Ausrichtsabschnitt 109 verbleibt in dem Kleingetriebe 101.

## Patentansprüche

1. Getriebe, insbesondere Kleingetriebe (1, 101) für einen Elektrokleinmotor (2, 102), mit einem ersten Zahnrad (5, 105) und einem zweiten, in einer Betriebsstellung mit einem Eingriffsabschnitt (8, 108) in Eingriff mit dem ersten Zahnrad (5, 105) stehenden zweiten Zahnrad (7, 107),
**dadurch gekennzeichnet, dass** das zweite Zahnrad (7, 107) an seinem äußeren Umfang einen den Eingriffsabschnitt (8, 108) stirnseitig überragenden Ausrichtsabschnitt (9, 109) hat und dass die Zahnräder (5, 7, 105, 107) axial zueinander von einer beabstandeten Montagestellung in die Betriebsstellung bewegbar sind.

2. Getriebe nach Anspruch 1, **dadurch gekennzeichnet, dass** der Eingriffsabschnitt (8, 108) und der Ausrichtsabschnitt (9, 109) auf der dem Elektrokleinmotor (2, 102) abgewandten Ende des zweiten Zahnrades (7, 107) angeordnet sind.

3. Getriebe nach Anspruch 1 oder 2, **dadurch gekennzeichnet, dass** das zweite Zahnrad (7, 107) auf einer Welle (6) des Elektrokleinmotors (2, 102) befestigt ist und dass eine Axialführung (10) an dem Elektrokleinmotor (2, 102) angeordnet ist.

4. Getriebe nach Anspruch 3, **dadurch gekennzeichnet, dass** eine Verschraubung des Elektrokleinmotors (2, 102) in einem Getriebegehäuse als Axialführung (10) für eine bauliche Einheit aus Elektrokleinmotor (2, 102) und zweitem Zahnrad (7, 107) ausgebildet ist.

5. Getriebe nach zumindest einem der Ansprüche 1 bis 4,
**dadurch gekennzeichnet, dass** sich der Ausrichtsabschnitt (9, 109) über den halben Umfang des zweiten Zahnrades (7, 107) erstreckt.

6. Getriebe nach zumindest einem der Ansprüche 1 bis 5,
**dadurch gekennzeichnet, dass** der Ausrichtsabschnitt (9) einstückig mit dem Eingriffsabschnitt (8) gefertigt ist.

7. Getriebe nach zumindest einem der Ansprüche 1 bis 5,
**dadurch gekennzeichnet, dass** der Ausrichtsabschnitt (109) lösbar mit dem zweiten Zahnrad (107) verbunden ist.

8. Getriebe nach Anspruch 7, **dadurch gekennzeichnet, dass** der Ausrichtsabschnitt (109) einen Zapfen (112) hat und dass der Zapfen (112) in einer zentralen Bohrung (113) des zweiten Zahnrades (107) befestigt ist.

9. Verfahren zur Montage eines Getriebes, insbesondere eines Kleingetriebes (1, 101) für einen Elektrokleinmotor (2, 102), bei dem ein erstes Zahnrad (5, 105) in Eingriff mit einem zweiten Zahnrad (7, 107) gebracht wird, **dadurch gekennzeichnet, dass** das zweite Zahnrad (7, 107) in eine Montagestellung gebracht wird, bis ein stirnseitig zurückgesetzter Eingriffsabschnitt (8, 108) des zweiten Zahnrades (7, 107) einer Stirnseite des ersten Zahnrades (5, 105) gegenübersteht, dass das zweite Zahnrad (7, 107) um seine Drehachse gedreht wird, bis das zweite Zahnrad (7, 107) mit einem stirnseitig vorstehenden Ausrichtsabschnitt (9, 109) in das erste Zahnrad (5, 105) eingreift und dass die beiden Zahnräder (5, 105, 7, 107) axial zueinander in eine Betriebsstellung bewegt werden, in der die beiden Zahnräder (5, 105, 7, 107) über den vollen Umfang miteinander in Eingriff stehen.

10. Verfahren nach Anspruch 9, **dadurch gekennzeichnet, dass** das zweite Zahnrad (7, 107) axial von der Montagestellung in die Betriebsstellung bewegt wird.
